# EUROPEAN PATENT SPECIFICATION

(11) **EP 1 449 719 B1**
(45) Date of publication and mention of the grant of the patent: **30.09.2009**
(21) Application number: 01275056.8
(22) Date of filing: 26.11.2001
(51) Int. Cl.: B60R 1/04

(54) **BREAKAGE-PREVENTION SUPPORT STRUCTURE FOR MIRRORS MOUNTED INSIDE A VEHICLE**
STÜTZKONSTRUKTION ZUR VERHINDERUNG EINES BRECHENS FÜR INNERHALB EINES FAHRZEUGS MONTIERTE SPIEGEL
STRUCTURE SUPPORT ANTI-CASSE POUR MIROIRS MONTES A L'INTERIEUR D'UN VEHICULE

(43) Date of publication of application: 25.08.2004
(73) Proprietor: GRUPO ANTOLIN-INGENIERIA, S.A., 09007 Burgos (ES)
(72) Inventor: HERREMANS, Philippe, 09005 Burgos (ES)
(74) Representative: Capitan Garcia, Maria Nuria
(86) International application number: PCT/ES2001/000454
(87) International publication number: WO 2003/053740

(56) References cited:
- EP-A- 0 615 882
- EP-A- 1 531 083
- WO-A-01/26890
- ES-A- 8 306 688
- FR-A- 2 643 028
- US-A- 1 972 320
- US-A- 3 391 895
- US-A- 3 926 470
- US-A- 4 227 242
- US-A- 5 178 448
- US-A- 5 283 696
- US-A- 5 401 073
- US-A- 5 521 760

## Description

The invention refers to a support structure for any glass mirror fitted in the interior of a vehicle or, more generally, in places where it may be required to support impacts without breaking.

In general, most mirrors fitted in the interior of a vehicle are of one of two types: those manufactured in metal and those made of glass. The arrangement described here is designed to be applied to glass mirrors.

Glass mirrors offer a wide range of advantages over metal ones: greater image quality, better appearance, lighter, greater resistance to aging and corrosion, and a considerably lower cost.

As a result, manufacturers tend to prefer to use mirrors made of glass.

On the other hand, though, the fragility and poor impact-performance of glass mirrors, and the way in which they fracture, with cutting edges and sharp fragments, etc., represent a serious drawback.

In addition, safety regulations for vehicles require that in the event of impact the mirror must not break in such a way as to create cutting edges, and must certainly not allow cutting fragments to break off that might hann the occupants in any way.

The result is that the use of glass mirrors is not always suitable or possible and in such cases metal mirrors have to be used.

The use of glass mirrors also presents drawbacks due to the faults detected when they undergo standard compliance tests to ensure proper impact performance.

When these glass mirrors are fitted on a component in the interior of the vehicle and suffer an impact, they may break in one of three failure modes:
a. -Failure due to buckling resulting from the inertia of the mirror itself at the moment of impact. The inertia stresses generated in an impact do not act equally on all the points in the glass of the mirror, and this tends to deform the glass, making it bend. Since glass cannot support large amounts of warping, it may break as a result.
b. - Failure due to the compression stresses generated by the different forces acting on the mirror at the moment of the impact, which can also cause breakage of the mirror.
c. -Failure due to the bending stresses in the mirror generated by the forces acting directly on it and the corresponding reactions in both the supports and other components of the environment of the mirror itself, with which it may come into contact in the event of an impact.

At present, and as far as is known, there are different arrangements for fitting and housing the mirror. The most common of these arrangements are described below, according to the technology used for construction of the element on which the mirror is fitted, particularly in the area of the sunshade.

All these arrangements involve prefitting the mirror in a plastic casing which may be simply fitted on with a series of flanges and/or supports that hold it in position, glued, or even super-injected onto the mirror. This casing can be open or completely closed at the back.

In turn this casing is fitted onto the element (sun shade, seat, trim, etc.) which holds the mirror. There are several systems of assembly. The most common is that the casing of the mirror is in some way provided with flanges or protuberances, capable of securing it and of being secured to some part of the structure of the element on which it is to be fitted. Other arrangements are sometimes used, such as screws.

The mirror's impact performance once fitted depends to a large extent on the assembly procedure used, the anchoring points and their position, and on the rigidity of the bearing element, which depends on the technology used in manufacture.

One of these technologies consists of having the bearing element made of.rigid foam (polyurethane, expanded polypropylene, etc.), which gives it its external shape, and of subsequently covering it with a decorative cladding. Normally this body is reinforced with a reinforcing structure (in plastic, metal, etc.).

This arrangement works well in terms of compression failure mode (b), but not in the case of the two other failure modes, (a) and (c).

Another common solution is to make a rigid plastic casing which acts as both body and structure at the same time. The cladding is fitted on top of this casing, and together they give the external appearance of the assembly. To this same structure are fitted all the other elements (lighting, switches, etc.), included in the mirror.

In this case the mirror can be fitted in different ways:
directly onto the main plastic structure in the area designed for this purpose or on a second plate - also made of plastic - which is in turn bolted onto the main structure; secured between an external trim frame fitted on the visible face of the mirror and attached to the plastic structure, and flexible supports in the same plastic structure on the non-visible side of the mirror; in this case the mirror rests on these supports, which may be pins, internal guides, etc.

In these arrangements, depending on the rigidity of the mirror support on the structure, the failure mode will be either by compression (b) if it is very rigid, or by bending if it is not very rigid.

As a palliative measure against breakage of the mirror as the result of impact, some manufacturers incorporate designs that try to reduce the risk of breakage at least partially, either by incorporating a collapsible cover to cover the mirror or by moving the plane of the mirror a few millimetres towards the interior of the element on which it is fitted, thus reducing the chance that an object or the occupant of the vehicle might impact directly on the glass in the mirror.

However these measures still do not ensure compliance with the regulations, as they do not prevent breakage of the mirror under the conditions specified therein. In addition, they impose style limitations, since they require additional space and a specific shape.

Different mounting techniques for glass mirror have been developed up to now as the ones disclosed in FR 2643028, US 5283696, US 5401073, US 3926470, US 5521760, EP 0615882, US 5178448, EP 1531083 and US 4227242. Some of them as EP 0615882, US 5178448 and US 4227242 are provided with an absorbent layer in contact with the glass mirror, others as FR 2643028, US 5283696 and US 5521760 are provided with a rigid layer in contact in its whole surface with the glass mirror, but none of them are provided simultaneously with both layer configuring an assembly housed in the interior of a groove, in which there is a perimeter guide for it in the base body,
wherein the guide allows a relative movement of the entire assembly in relation to the element on which is fitted perpendicularly to the surface of the glass mirror.

In particular, it is known from US-A-5 178 448 to provide a support structure for mirrors fitted in the interior of the vehicle, which has a mirror element mounted to the front of a case, opposite a back wall, by a circumscribing bezel irremovably connected with the case, the mirror being made of glass and the bezel acting as a housing to receive the mirror and keep it in a stable position inside, whereby the bezel and case receives an assembly consisting of a plate of absorbent material applied by means of an adhesive layer on the back of the glass mirror such that the surface of the absorbent material comes in entirely flat contact with the rear face of the glass of the mirror, the case sealing against the back surface of the absorbent material, the assembly being guided at the perimeter in relation to the internal walls of the circumscribing bezel, thereby allowing movement of the assembly within the case and bezel perpendicular to the plane of the outer surface of the mirror.

In any case, the problem of the systems described above lies in the fact that in the event of impact, none of the systems used to date is capable of ensuring compliance with the specifications on resistance to breakage in case of direct impact, or the tests set down for this purpose.

As opposed to these techniques, the purpose of this invention is to offer a system of mirror assembly for components in the interior of the vehicle and similar which allows predictable performance from design phase, also guaranteeing resistance to breakage of the mirror in cases of impact, which at minimum lies within the conditions specified in the safety regulations for vehicles (EU regulations on Internal Conditioning, Head Impact regulations in the US, etc.).

Another purpose of the invention is a mirror assembly system for the interior of a vehicle and similar that allows the use of glass mirrors, of better quality and of more economical cost, and their inclusion in situations where there use was previously impossible.

Finally, another purpose of the invention is a system of mirror assembly for components of the interior of a vehicle and similar which reduces the limitations on style of these elements imposed by reasons of safety in the event of impact.

In order to achieve these objectives, the invention claims a mirror assembly system for components of the interior of a vehicle with an internal body, generally made of plastic, in whose body there is a surface portion, acting as a groove, for example, open to the exterior, inside which there is a sandwich-like assembly, comprising a glass mirror, a rigid buckling-resistant layer and a layer capable of deformation by absorbing energy when it is submitted to compression stresses.

The surfaces of the glass mirror and the rigid layer are perfectly fitted together, and the latter is in turn in contact with the absorbent layer, allowing a relative tolerance in the two elements.

The assembly, as mentioned above, is housed in the interior of the corresponding groove, in which there is a perimeter guide for it in the base body. This guide must enable relative movement of the entire invention in relation to the element on which it is fitted perpendicularly to the surface of the glass mirror.

The guide and seat of the invention may be formed of a groove or other means, for example legs, projections, etc., in the base body of the element onto which is fitted.

The surface of the rigid layer in contact with the mirror must be flat so that there is a broad mutual contact covering all of the rear face of the glass mirror.

The other face of the rigid layer may be flat, or have any type of reinforcing geometry to increase its rigidity, such as ribs, but must always follow the theoretical surface defined by the back face of the mirror

The three component elements of the invention may be stably interrelated, for example using glue, to constitute a block of some compactness.

The rigid and absorbent layers may be of thicknesses and materials suitable to their function, and there is no problem in determining the precise characteristics for the proposed purposes.

The enclosed sheet of drawings shows the details of the invention, and includes, without being limited to, the following: -
Fig. 1 shows a cross-section of the area of the vehicle element to which the invention is applied, together with the invention itself.
Fig. 2 shows a cross-section of a construction alternative not falling within the scope of the present invention, where the absorbent layer is integrated into the surroundings of the element of the vehicle onto which it is fitted.
Fig. 3 is a variation of the guide system for the invention as a whole in its housing.

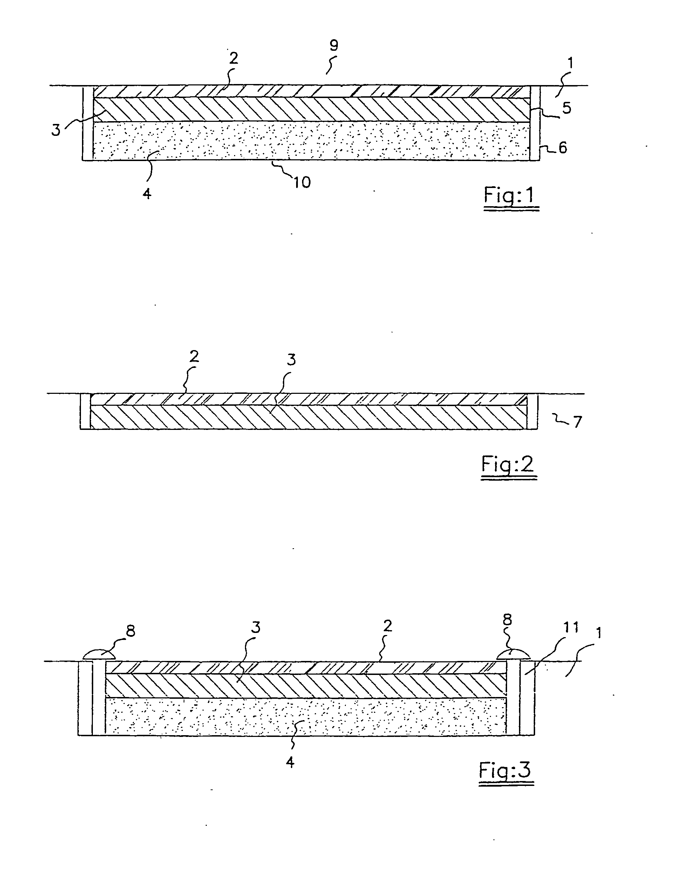

In the case of Fig. 1, it is important to note the base body (1) of the vehicle element in which the invention is fitted, which can be made of any type of material, for example plastic, and subsequently covered with a cladding, not shown in this figure. The element of the vehicle which incorporates a mirror (2) visible from the exterior naturally has an opening (9) through which said mirror can be seen.

In this base body (1), a groove (10) is made, inside which is housed the composite of the invention, a lower absorbent layer (4), a rigid layer (3) on top of it and the glass mirror (2).

This assembly has a perimeter edge (5) which stands at a small distance from the side perimeter wall (6) of the groove (10), as shown.

In the construction alternative not falling within the scope of the invention shown in Fig. 2, the internal absorbent layer has been eliminated, due to the fact that in this case, the base body (7) is of the type made from absorbent material, e.g. plastic foam. Thus, the assembly of the invention is limited to the rigid layer (3) and the glass mirror.

Finally Fig. 3 shows the assembly of the invention (2, 3, 4) housed in a gap (11) which is larger than the floor of the assembly, in which control is carried out by means of pins (8) which emerge from said gap.

## Claims

1. Anti-break support structure for mirrors fitted in the interior of the vehicle, which has an internal base body (1, 7), occupied on the exterior by a cladding visible from the exterior and fitted with an opening (9) to the exterior through which the mirror is accessed (2); this is made of glass, and the base body (1, 7) has a housing (10) to receive the mirror and keep it in a stable position inside,
wherein the housing (10) of the base body (1) receives an assembly consisting of a plate of absorbent material (4) applied on the back of said housing; a rigid layer (3) supported on said layer and a glass mirror (2) supported in turn on the rigid layer, in which the surface of the rigid layer comes in entirely flat contact with the rear face of the glass of the mirror (2), fitting totally and on the surface to said rear face of the glass (2) on which the assembly (2, 3, 4) is guided at the perimeter in relation to the internal walls of the gap (11) of the base body (1), allowing - at minimum - movement of the assembly perpendicular to the plane of the mirror.

2. Anti-breakage support structure for mirrors fitted in the interior of the vehicle, in accordance with Claim 1 above, **characterised by** the fact that guiding of the assembly, glass mirror (2), rigid plate (3) and absorbent plate (4) in relation to the housing in the body base (1), is performed using elements (8) projecting from the walls of the housing.

## Patentansprüche

1. Bruchsichere Tragstruktur für im Fahrzeuginneren befestigte Spiegel, die einen inneren Grundkörper (1, 7) aufweist, der außen in einer von außen sichtbaren Verkleidung aufgenommen ist und in eine mit dem Äußeren in Verbindung stehende Öffnung (9) eingesetzt ist, durch welche der aus Glas bestehende Spiegel (2) zugänglich ist, wobei der Grundkörper (1, 7) ein Gehäuse (10) zur Aufnahme des Spiegels und zur Aufrechterhaltung einer stabilen Position desselben im Inneren aufweist, wobei das Gehäuse (10) des Grundkörpers (1) eine Baugruppe aufnimmt, die aus einer auf der Rückseite des Gehäuses angebrachten Platte aus absorbierendem Material (4), einer darauf gehaltenen starren Schicht (3) und einem Glasspiegel (2) besteht, der sich seinerseits auf der starren Schicht abstützt, wobei die Oberfläche der starren Schicht vollkommen eben an der Rückseite des Spiegelglases (2) anliegt und vollständig an die Oberfläche besagter Rückseite des Glases (2) angepasst ist, wobei die Baugruppe (2, 3, 4) am Umfang in Bezug auf die Innenwände des Spalts (11) im Grundkörper (1) geführt ist und mindestens eine Bewegung der Baugruppe senkrecht zur Spiegelebene ermöglicht.

2. Bruchsichere Tragstruktur für im Fahrzeuginneren montierte Spiegel nach Anspruch 1, **dadurch gekennzeichnet, dass** die Führung der Baugruppe Glasspiegel (2), starre Platte (3) und absorbierende Platte (4) in Bezug auf das Gehäuse im Grundkörper (1) unter Verwendung von Elementen (8) erfolgt, die von den Gehäusewänden abstehen.

## Revendications

1. Structure de support anti-bris pour miroirs montée à l'intérieur du véhicule, laquelle a un corps de base interne (1, 7), situé à l'extérieur par le biais d'un revêtement visible depuis l'extérieur et monté avec une ouverture (9) à l'extérieur à travers laquelle on peut accéder au miroir (2), celui-ci est fait en verre, et le corps de base (1, 7) possède une ouverture (10) pour recevoir le miroir et le maintenir dans une position stable en son sein, dans laquelle, le logement (10) du corps de base (1) reçoit un ensemble consistant en une plaque de matière absorbante (4) appliquée sur la partie arrière dudit logement ; une couche rigide (3) en appui sur ladite couche et un miroir de verre (2) en appui à son tour sur la couche rigide, dans laquelle la surface de la couche rigide entre en contact complètement plat avec la face arrière de la glace du miroir (2), en s'ajustant complètement et sur la surface à ladite face arrière de la glace (2) sur laquelle l'ensemble (2,3,4) est guidé sur le périmètre par rapport aux parois interne de la fente (11) du corps de base (1), en permettant au moins- le mouvement de l'ensemble de manière perpendiculaire au plan du miroir.

2. Structure de support anti-bris pour miroirs montée à l'intérieur du véhicule, selon la revendication 1 antérieure, **caractérisée en ce que** le guidage de l'ensemble, le miroir en verre (2) la plaque rigide (3) et la plaque absorbante (4) par rapport au logement dans le corps de base (1), est réalisé en utilisant des éléments (8) qui se projettent à partir des parois du logement.
